# FASCICULE DE BREVET EUROPEEN

(11) **EP 1 445 146 B1**
(45) Date de publication et mention de la délivrance du brevet: **11.05.2005**
(21) Numéro de dépôt: 04290188.4
(22) Date de dépôt: 26.01.2004
(51) Int. Cl.: B60P 3/34

(54) **Véhicule, utilitaire ou de loisir, à capacité variable.**
Nutz- oder Freizeitfahrzeug mit variablem Innenraum
Recreational or commercial vehicle with variable capacity

(30) Priorité: 10.02.2003 FR 0301542
(43) Date de publication de la demande: 11.08.2004
(73) Titulaire: PROJECA, 78960 Voisins Le Bretonneux (FR)
(72) Inventeur: DRUELLE, Fabrice, 78470 Saint Remy les Chevreuse (FR)
(74) Mandataire: Keib, Gérard

(56) Documents cités:
- FR-A- 2 727 070
- US-A- 3 368 839
- US-A- 4 261 614

## Description

La présente invention concerne un véhicule, utilitaire ou de loisir, à capacité variable de type fourgon.

Un véhicule utilitaire existant de type fourgon est construit sur la base d'un véhicule à structure autoporteuse ou d'un châssis comportant un habitacle à l'avant où prennent place le conducteur et d'éventuels passagers et, à l'arrière, une cabine fixe servant de volume utile dont l'aménagement est fonction de la destination de ce véhicule. Ce volume est généralement accessible par une double porte en partie arrière et d'une porte latérale coulissante.

Le volume de la cabine fixe est déterminé une fois pour toute lors de la fabrication du véhicule.

Il a déjà été proposé des véhicules utilitaires ou de loisir à volume variable par déplacement des parois latérales : de telles réalisations sont par exemple décrites dans les documents WO-0100441-A.

Ces réalisations antérieures présentent des inconvénients nombreux tels que : le volume supplémentaire n'est qu'en largeur ; les aménagements intérieurs doivent permettre le déplacement des parois latérales sans risque ; etc.

On connaît par ailleurs selon l'US-3 368 839, une caravane sans roue transportable sur le plateau de chargement d'un véhicule du type pick-up.

En position de transport, l'ensemble de cette caravane est fixé sur le plateau de chargement du véhicule au moyen de sangles ou de câbles.

La caravane est composée d'une cabine fixe, et d'une cabine mobile, ou sur-cabine, qui, en position route, recouvre ladite cabine fixe, de moyens de coulissement de ladite cabine mobile sur ladite cabine fixe et de moyens d'actionnement desdits moyens de coulissement, ladite cabine mobile comprenant un plancher coulissant par rapport au plancher de la cabine fixe (3) et une partie desdits moyens de coulissement étant située entre les passages de roues, les moyens de coulissement rendant la cabine mobile solidaire de la cabine fixe du véhicule de base, guidant le déplacement de la cabine mobile et supportant le porte à faux de la cabine mobile lorsque celle-ci est en position reculée par rapport à la cabine fixe.

A l'arrêt du véhicule, on peut faire coulisser vers l'arrière la partie arrière de la caravane pour augmenter le volume de celle-ci. Les moyens de coulissement sont solidaires non pas d'une partie fixe du véhicule, mais de la caravane elle-même qui est mobile c'est-à-dire séparable du véhicule par l'utilisateur.

L'inconvénient de cette réalisation connue réside dans le fait que le transport d'une caravane fixée par des sangles sur le plateau arrière d'un pick-up n'est pas compatible avec les normes actuelles, en raison des dangers qu'un tel transport peut engendrer en raison notamment de la précarité de la fixation de la caravane.

De plus, le fait de placer une caravane sur les ridelles d'un pick-up a pour conséquence que le toit de la caravane est situé très au-dessus du toit de l'habitacle avant du véhicule et que les parois latérales de la caravane débordent très largement de part et d'autre des ridelles latérales. Ainsi, la caravane augmente considérablement l'encombrement du véhicule de base.

D'autres véhicules à cabine mobile sont également connus selon les documents FR-A-2727070 et US-A-4261614.

Ainsi, l'un des buts de la présente invention est-il de fournir un véhicule, utilitaire ou de loisir, obviant ces inconvénients de l'art antérieur.

Un autre but de l'invention est de fournir un tel véhicule sans modifier la structure d'origine.

Un but supplémentaire est de fournir un tel véhicule gardant une grande maniabilité au roulage et permettant de disposer d'un volume utile important en stationnement.

Ces buts, ainsi que d'autres qui apparaîtront par la suite, sont atteints par un véhicule, utilitaire ou de loisir, à capacité variable construit sur la base d'un fourgon existant selon la revendication 1.

La cabine mobile (ou sur-cabine) est ainsi reliée à une partie fixe du véhicule, à savoir la cabine fixe de ce dernier.

En position, de route, la cabine mobile recouvre presque totalement la cabine fixe et n'augmente que faiblement la hauteur et la largeur ainsi que le poids du véhicule de base.

A l'arrêt du véhicule et après coulissement vers l'arrière de la cabine mobile, le volume de l'ensemble est augmenté en moyenne de deux tiers du volume de la cabine fixe du véhicule de base.

Le véhicule de base est un véhicule existant du type fourgon comportant une cabine arrière fixée au châssis.

Dans tous les cas, l'expression cabine fixe désigne une cabine qui n'est pas susceptible d'être démontée par la suite, contrairement au cas de la caravane décrite dans l'US-3 368 839.

Avantageusement, la cabine mobile est constituée, en premier lieu, d'une armature rigide, et, en second lieu, d'un habillage intérieur et extérieur fixés sur cette armature. L'armature rigide est constituée selon un mode de réalisation préférée, par des profilés métalliques, tels que des arceaux, reliés entre eux.

De préférence, des moyens de coulissement sont également prévus à la partie supérieure du véhicule. Ils peuvent également comprendre des moyens de coulissement sur les parties latérales du véhicule.

Selon un mode de réalisation avantageux, les moyens de coulissement sur la partie supérieure du véhicule sont constitués, d'une part, par une glissière, qui est disposée sur le pavillon de la cabine fixe, selon l'axe longitudinal du pavillon, et, d'autre part, par des patins de coulissement situés soit directement sur l'armature, soit sur la partie de l'habillage intérieur en regard, de préférence au niveau de l'armature, et selon l'axe longitudinal de la cabine mobile.

Les moyens de coulissement prévus à la partie inférieure du véhicule rendent la cabine mobile solidaire de la cabine fixe du véhicule de base, guident le déplacement de la cabine mobile et supportent le porte à faux de la cabine mobile lorsque celle-ci est en position reculée par rapport à la cabine fixe.

Avantageusement, le véhicule utilitaire selon la présente invention comprend des moyens de verrouillage/déverrouillage de la cabine mobile sur la cabine fixe.

La description qui va suivre et qui ne présente aucun caractère limitatif, doit être lue en regard des figures annexées, parmi lesquelles :
- la figure 1 est une vue de côté d'un véhicule à capacité variable selon la présente invention, en position route ;
- la figure 2 est une vue de côté du véhicule selon la figure 1, en position de stationnement ;
- la figure 3 est une vue en coupe selon ligne III-III de la figure 1 ;
- la figure 4 est une vue en perspective avec arrachements de la partie avant du véhicule d'un ensemble cabine fixe-cabine mobile pour un véhicule selon la figure 1, en position route ;
- la figure 5 est une vue en perspective avec arrachements de la partie avant du véhicule d'un ensemble cabine fixe-cabine-mobile pour un véhicule selon la figure 2, en position de stationnement ;
- la figure 6 est une vue éclatée d'une cabine mobile pour un véhicule selon la figure 1 ;
- la figure 7 est une vue agrandie du détail A de la figure 3 représentant une section des moyens de coulissement supérieurs ; et,
- la figure 8 est une vue agrandie du détail B de la figure 3 représentant une section des moyens de coulissement inférieurs.

Afin de donner une signification aux termes tels que avant, arrière, supérieur, inférieur, il est convenu d'orienter le véhicule par rapport à sa partie avant dans son sens d'avancement normal.

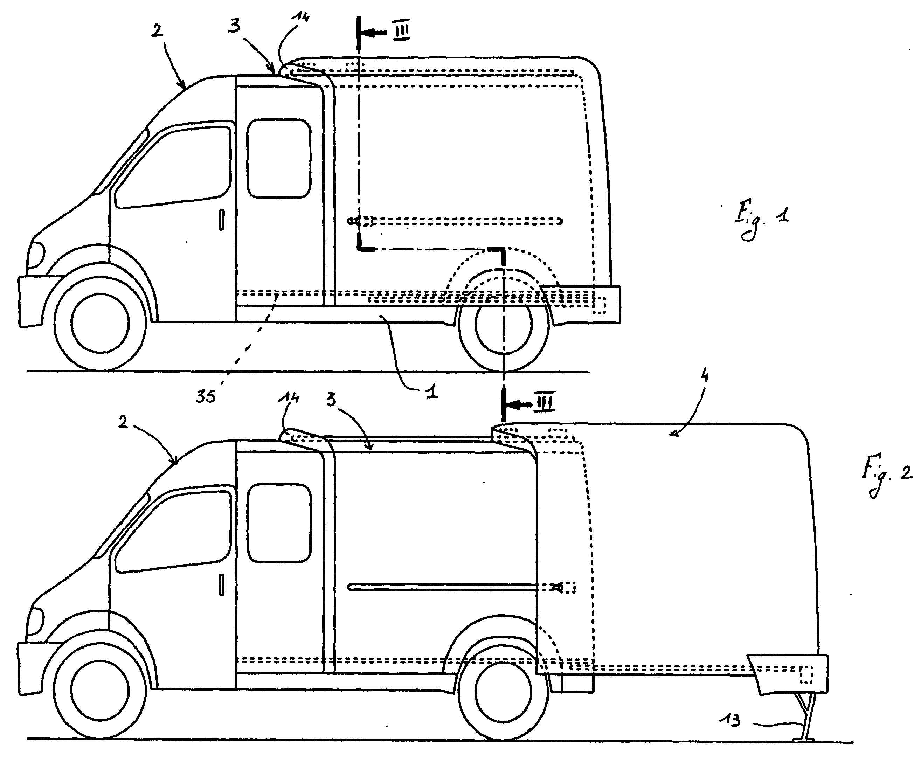

Ainsi qu'on peut le voir sur la figure 1, un véhicule du type fourgon comportant notamment un soubassement 1 sur lequel est monté, à l'avant, un habitacle 2 pour le conducteur et d'éventuels passagers et, à l'arrière, une cabine fixe 3 dont l'aménagement est fonction de la destination de ce véhicule. Cette cabine fixe 3 est fermée par une partie arrière mobile, le plus généralement par une double porte.

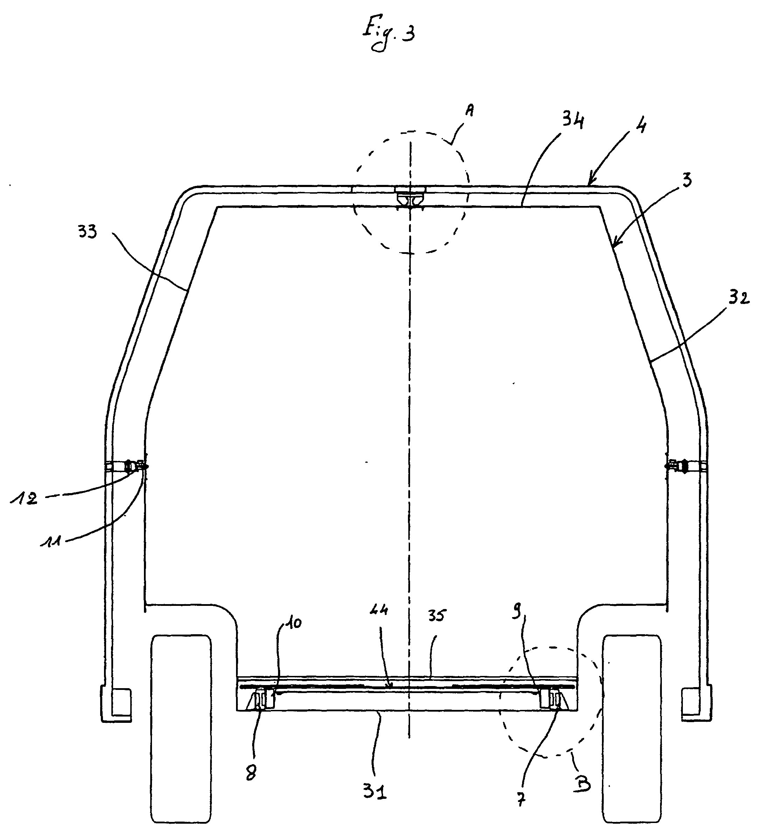

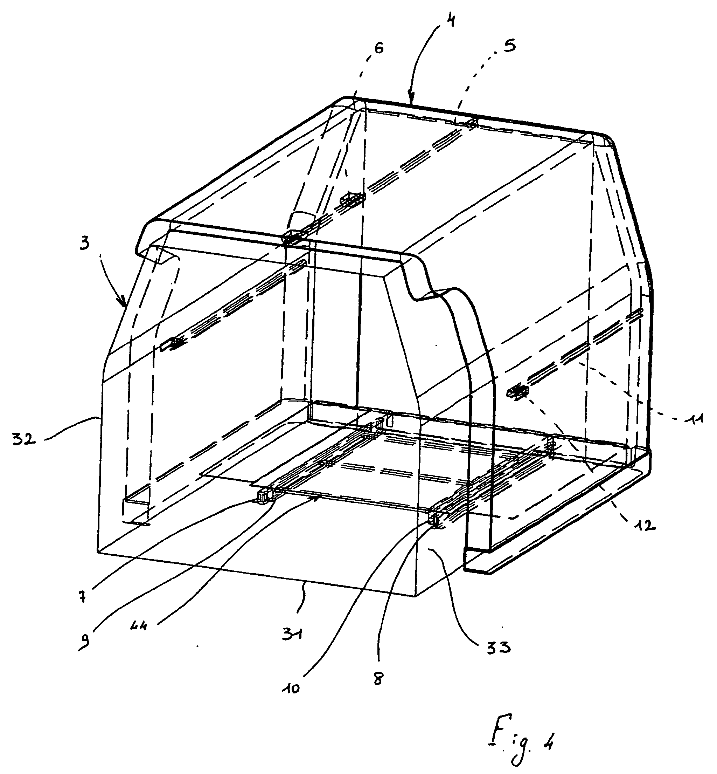

De façon traditionnelle, la cabine fixe 3 repose sur le soubassement 1 et comprend (cf. figure 3) un plancher 31, de deux parois latérales 32 et 33, et un pavillon 34.

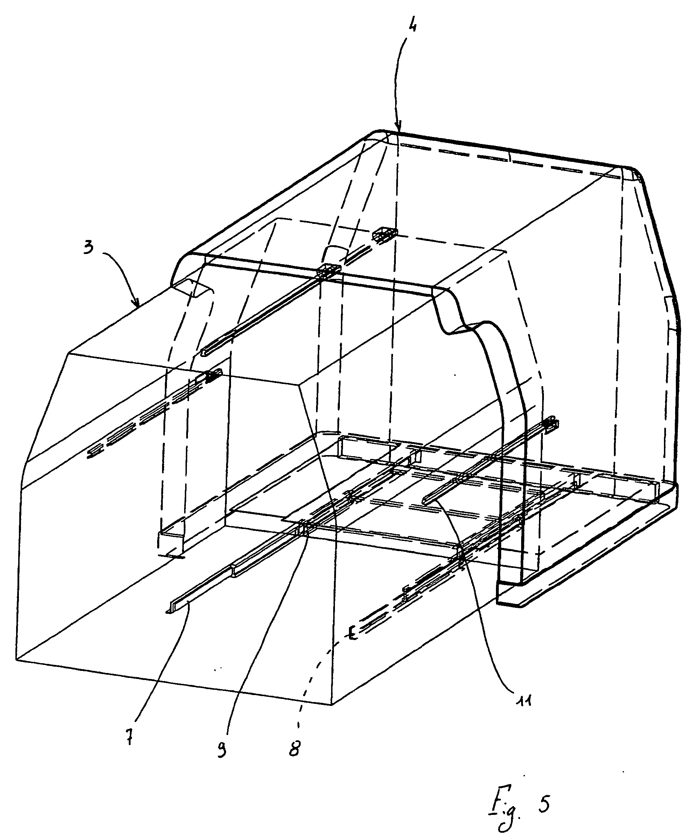

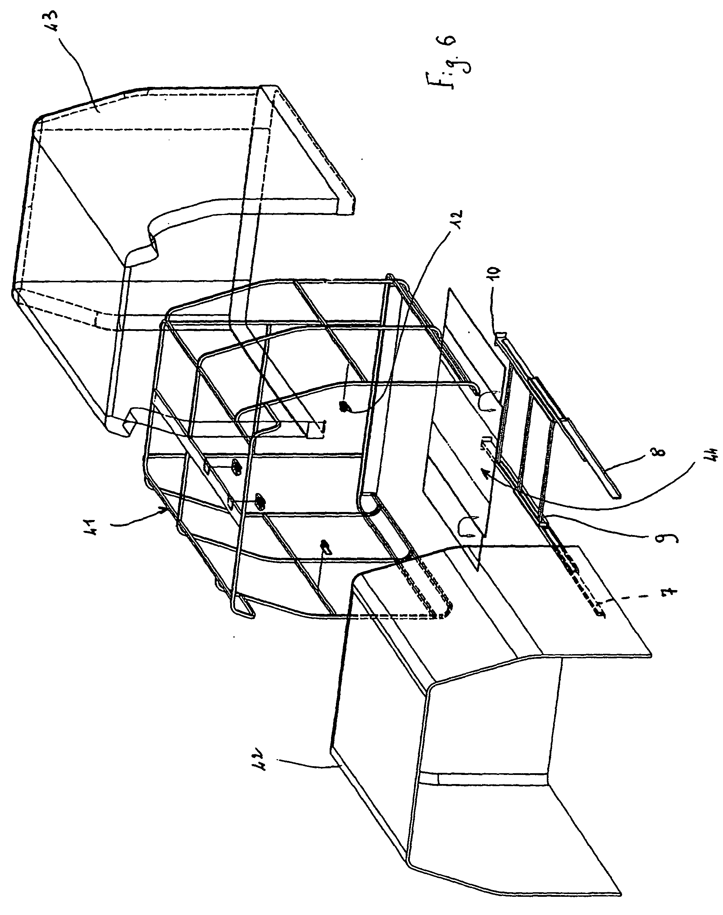

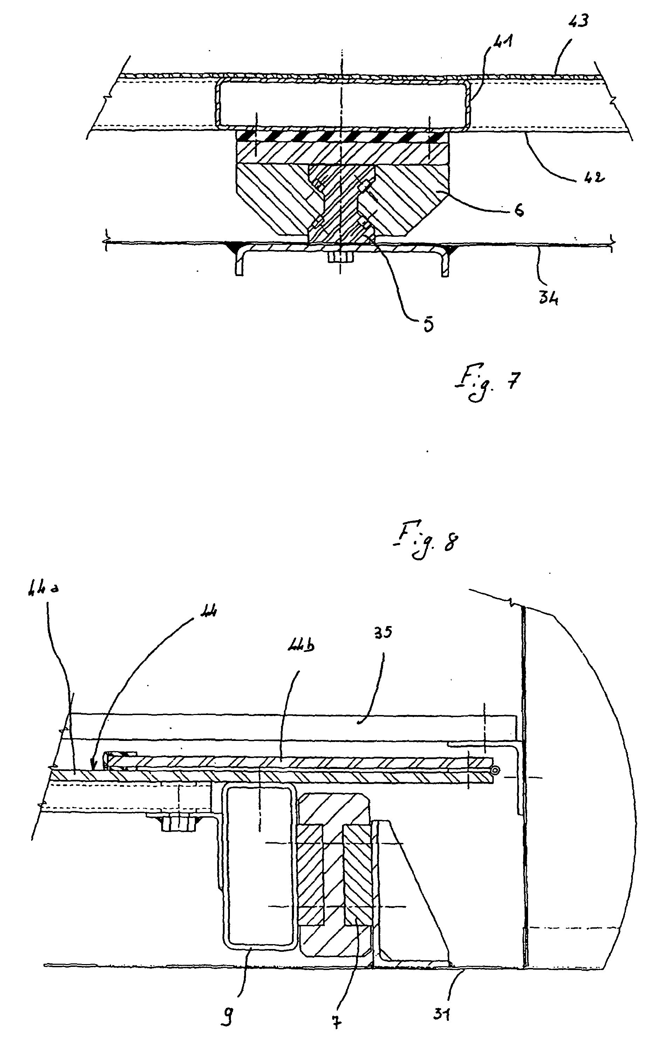

Selon la présente invention, ce véhicule comporte une cabine mobile, ou sur-cabine 4, qui, en position route, recouvre la cabine fixe 3 (cf. figure 1). Comme représenté notamment sur la figure 6, cette cabine mobile 4 est constituée, en premier lieu, par une armature rigide désignée dans son ensemble par la référence 41, en second lieu, d'un habillage intérieur 42 et extérieur 43 fixés sur cette armature 41. Cette cabine mobile 4 comprend aussi un plancher coulissant 44 relié à son extrémité arrière à l'armature 41 par l'intermédiaire des longerons 9 et 10 décrits ci-dessous.

Ce véhicule comprend aussi des moyens de coulissement permettant à la cabine mobile 4 d'être déplacée le long de cette cabine fixe 3 et des moyens d'actionnement manuels ou assistés de ces moyens de coulissement.

Ces moyens de coulissement sont constitués, d'une part, par des moyens de coulissement supérieurs et, d'autre part, par des moyens de coulissement inférieurs. Ils peuvent également comprendre des moyens de coulissements latéraux.

Les moyens de coulissement supérieurs sont constitués, d'une part, par une glissière 5, qui est disposée sur le pavillon 34, donc à l'extérieur de la cabine fixe 3, selon l'axe longitudinal de ce pavillon, et, d'autre part, par des patins de coulissement 6 situés soit directement sur l'armature 41 soit sur l'habillage intérieur 42, de préférence au niveau de cette armature et selon l'axe longitudinal de la cabine mobile 4.

Les moyens de coulissement inférieurs comprennent, d'une part, deux rails 7 et 8 disposés sur le plancher 31 de la cabine fixe 3 entre le passage de roues, et, d'autre part, deux longerons 9 et 10 situés à la face inférieure du plancher coulissant 44 et coopérant avec ces rails. Ces rails sont par exemple télescopiques. Bien évidemment, ces rails et longerons sont disposés parallèlement à l'axe longitudinal du véhicule.

Selon un mode de réalisation préféré, la cabine fixe 3 comprend un faux-plancher 35 disposé au-dessus du plancher coulissant 44 de telle sorte à former avec le plancher 31, les parois latérales 32 et 33 un espace de rangement dans lequel est situé, en position route, le plancher coulissant 44.

Les moyens de coulissement latéraux, lorsqu'ils existent, sont disposés sur l'extérieur des faces latérales 32 et 33 de la cabine fixe 3 et sur les faces intérieures des parois latérales correspondantes de l'habillage intérieur de la cabine mobile 4. Ces moyens comprennent par exemple un rail latéral 11 disposé longitudinalement sur la cabine fixe 3 et un galet 12 pouvant glisser dans ce rail : un tel dispositif est bien connu de l'homme de métier puisque ressemblant fort aux moyens de coulissement d'une porte latérale. Ces moyens de coulissement latéraux ont pour fonction, si nécessaire, d'aider au coulissement de la cabine mobile 4 sur la cabine fixe 3, et/ou de participer au maintien en position de la cabine mobile 4 sur la cabine fixe 3.

Quant aux moyens d'actionnement de ces moyens de coulissement, ils sont constitués par tout moyen de manoeuvre manuel ou motorisé connu de l'homme du métier.

En les mettant en oeuvre lorsque la cabine mobile 4 recouvre la cabine fixe 3, on entraîne simultanément, vers l'arrière, un glissement des patins 6 sur la glissière 5, et un coulissement du plancher mobile 44 sur le plancher fixe 34. Lorsque des moyens de coulissement latéraux sont présents, on entraîne aussi un glissement des galets 12 dans les rails 11 correspondants.

Lorsque le glissement de la cabine mobile 4 est au maximum, le plancher coulissant 44 peut être déplié latéralement. En effet, du fait de la présence des roues arrières, il faut que ce plancher coulissant 44 comporte une partie centrale 44a de largeur au plus égale à la distance entre ces roues et deux parties latérales 44b se rabattant sur cette partie centrale 44a.

La cabine mobile 4 comprend à son extrémité arrière des moyens d'appui tels que des béquilles 13 qui se déploient automatiquement ou manuellement pour participer au maintien en position déployée de la cabine mobile 4.

Le véhicule selon la présente invention peut aussi comporter un déflecteur 14 ou tout dispositif équivalent, situé sur l'habitacle 2 ou la cabine fixe 3 contre lequel vient buter la cabine mobile 4 en positon route : des moyens de verrouillage/déverrouillage peuvent être disposés sur ce déflecteur 14 et la cabine mobile 4 pour maintenir celle-ci en position route.

De même, sont prévues à l'extrémité de chaque moyen de coulissement des butées afin d'éviter que la cabine mobile 4 ne de désolidarise de la cabine fixe 3.

Il est bien évidemment prévu des moyens d'accès, à l'arrière du véhicule ou latéralement, au volume délimité par la cabine fixe ou par l'ensemble des deux cabines.

## Revendications

1. Véhicule, utilitaire ou de loisir, à capacité variable construit sur la base d'un fourgon existant sans en modifier la structure d'origine, ledit fourgon comportant notamment un soubassement (1) sur lequel sont assemblés, à l'avant, un habitacle (2) et, à l'arrière, une cabine fixe (3) comprenant un plancher (31), deux parois latérales (32, 33), et un pavillon (34), le véhicule comportant en outre une cabine mobile, ou sur-cabine, (4) qui, en position route, recouvre ladite cabine fixe (3), des moyens de coulissement de ladite cabine mobile (4) sur ladite cabine fixe (3) et des moyens d'actionnement desdits moyens de coulissement, ladite cabine mobile (4) comprenant un plancher (44) coulissant par rapport au plancher (31) de la cabine fixe (3) et lesdits moyens de coulissement comprennant, d'une part, deux rails (7, 8) disposés sur le plancher (31) de la cabine fixe (3) entre les passages de roues et, d'autre part, deux longerons (9, 10) situés à la face inférieure du plancher coulissant (44) et coopérant avec lesdits rails, les moyens de coulissement rendant la cabine mobile solidaire de la cabine fixe du véhicule de base, guidant le déplacement de la cabine mobile et supportant le porte à faux de la cabine mobile lorsque celle-ci est en position reculée par rapport à la cabine fixe.

2. Véhicule selon la revendication 1, **caractérisé par le fait que** la cabine mobile (4) est constituée, en premier lieu, d'une armature rigide (41) et, en second lieu, d'un habillage intérieur (42) et extérieur (43), fixés sur ladite armature (41).

3. Véhicule selon la revendication 2, **caractérisé par le fait que** l'armature rigide (41) est constituée par des profilés métalliques, tels que des arceaux, reliés entre eux.

4. Véhicule selon la revendication 1, **caractérisé par le fait que** des moyens de coulissement sont également prévus à la partie supérieure du véhicule.

5. Véhicule selon la revendication 4, **caractérisé par le fait que** des moyens de coulissement sont également prévus sur les parties latérales du véhicule.

6. Véhicule selon la revendication 4, **caractérisé par le fait que** lesdits moyens de coulissement sont constitués, d'une part, par une glissière (5), qui est disposée sur le pavillon (34) de la cabine fixe 3, selon l'axe longitudinal dudit pavillon, et, d'autre part, par des patins de coulissement (6) situés sur l'armature (41).

7. Véhicule selon la revendication 6, **caractérisé par le fait que** les patins de coulissement (6) sont situés directement sur l'armature (41) au niveau de ladite armature (41), et selon l'axe longitudinal de la cabine mobile (4).

8. Véhicule selon la revendication 6, **caractérisé par le fait que** les patins de coulissement (6) sont situés sur l'habillage intérieur (42), de préférence au niveau de ladite armature (41), et selon l'axe longitudinal de la cabine mobile (4).

9. Véhicule selon l'une quelconque des revendications 1 à 8, **caractérisé par le fait qu'**il comprend des moyens de verrouillage/déverrouillage de la cabine mobile (4) sur l'habitacle (2).

10. Véhicule selon l'une quelconque des revendications 1 à 8, **caractérisé par le fait qu'**il comprend des moyens de verrouillage/déverrouillage de la cabine mobile (4) sur la cabine fixe (3).

11. Véhicule selon l'une des revendications 1 à 10, **caractérisé en ce que** le plancher coulissant (44) comporte une partie centrale (44a) et deux parties latérales (44b) pouvant se rabattre sur la partie centrale.

## Patentansprüche

1. Nutz- oder Freizeitfahrzeug mit variablem Innenraum, hergestellt auf Basis eines existierenden Kastenwagens ohne Veränderung des ursprünglichen Aufbaus, insbesondere beinhaltend einen Unterbau (1), auf welchem vorne eine Fahrerkabine (2) und hinten eine fixierte Kabine (3) aufgebaut sind, beinhaltend einen Boden (31), zwei Seitenwände (32, 33) und ein Dach (34), das Fahrzeug beinhaltend weiterhin eine mobile Kabine oder Überkabine (4), welche die fixierte Kabine (3) in Fahrtrichtung überdeckt, Führungsmittel der mobilen Kabine (4) auf der fixierten Kabine (3) und Antriebsmittel der Führungsmittel, während die mobile Kabine (4) einen Boden (44) aufweist, welcher in Bezug auf den Boden (31) der fixierten Kabine (3) gleitbar ist, und die Führungsmittel einerseits zwei Schienen (7, 8) aufweisen, welche auf dem Boden (31) der fixierten Kabine (3) im Radzwischenraum angeordnet sind, und anderseits zwei Längsträger (9, 10), welche auf der Unterseite des gleitenden Bodens (44) angeordnet sind, und welcher mit den Schienen zusammenwirkt, während die Führungsmittel die mobile Kabine fest mit der fixierten Kabine des Basisfahrzeugs verbinden, die Bewegung der mobilen Kabine steuern und den Überhang der mobilen Kabine tragen, während sich diese in zurückgezogener Stellung in Bezug auf die fixierte Kabine befindet.

2. Fahrzeug nach Anspruch 1, **dadurch gekennzeichnet, dass** die mobile Kabine (4) in erster Reihe aus einem starren Gestell (41) besteht und in zweiter Reihe aus einer inneren (42) und äußeren Verkleidung (43), welche an dem Gestell (41) befestigt sind.

3. Fahrzeug nach Anspruch 2, **dadurch gekennzeichnet, dass** das starre Gestell (41) aus metallischen Profilen besteht, etwa Gewölbebogen, welche miteinander verbunden sind.

4. Fahrzeug nach Anspruch 1, **dadurch gekennzeichnet, dass** im oberen Teil des Fahrzeuges in gleicher Weise Führungsmittel angeordnet sind.

5. Fahrzeug nach Anspruch 4, **dadurch gekennzeichnet, dass** an den seitlichen Teilen des Fahrzeuges in gleicher Weise Führungsmittel angeordnet sind.

6. Fahrzeug nach Anspruch 4, **dadurch gekennzeichnet, dass** die Führungsmittel einerseits aus einer Führungsschiene (5) bestehen, welche auf dem Dach (34) der fixierten Kabine (3) angeordnet ist, auf der Längsachse des Dachs, und anderseits aus Gleitkufen (6), welche sich auf dem Gestell (41) befinden.

7. Fahrzeug nach Anspruch 6, **dadurch gekennzeichnet, dass** die Gleitkufen (6) direkt auf dem Gestell (41) angeordnet sind auf Höhe des Gestells (41), und auf der Längsachse der mobilen Kabine (4).

8. Fahrzeug nach Anspruch 6, **dadurch gekennzeichnet, dass** die Gleitkufen (6) direkt auf der Innenverkleidung (42) angeordnet sind, vorzugsweise auf Höhe des Gestells (41), und auf der Längsachse der mobilen Kabine (4).

9. Fahrzeug nach einem der Ansprüche 1 bis 8, **dadurch gekennzeichnet, dass** das Fahrzeug Verriegelungs-/Entriegelungsmittel der mobilen Kabine (4) an der Fahrerkabine (2) aufweist.

10. Fahrzeug nach einem der Ansprüche 1 bis 8, **dadurch gekennzeichnet, dass** das Fahrzeug Verriegelungs-/Entriegelungsmittel der mobilen Kabine (4) an der fixierten Kabine (3) aufweist.

11. Fahrzeug nach einem der Ansprüche 1 bis 10, **dadurch gekennzeichnet, dass** der Gleitboden (44) ein Mittelteil (44a) und zwei Seitenteile (44b) aufweist, welche über das Mittelteil hochgeklappt werden können.

## Claims

1. A commercial or recreational vehicle, with variable capacity, built on the basis of an existing van, without modifying the original structure thereof, said van comprising notably a substructure (1) whereon are assembled, at the front, a passenger space (2) and, at the rear, a fixed cabin (3) including a floor (31), two lateral walls (32, 33) and a roof hood (34), the vehicle including moreover a mobile cabin, or sub-cabin (4) which, in road position, covers said fixed cabin (3), means for sliding said mobile cabin (4) over said fixed cabin (3) and means for actuating said sliding means, said mobile cabin (4) comprising a floor (44) which may slide relative to the floor (31) of the fixed cabin (3) and said sliding means comprising on the one hand, two rails (7, 8) arranged on the floor (31) of the fixed cabin (3) between the wheel housings and, on the other hand, two girders (9, 10) situated at the lower face of the sliding floor (44) and co-operating with said rails, whereas the sliding means interconnect the mobile cabin with the fixed cabin of the basic vehicle, thereby guiding the displacement of the mobile cabin and supporting the cantilever section of the mobile cabin when the latter is in retracted position with respect to the fixed cabin.

2. A vehicle according to claim 1, **characterised in that** the mobile cabin (4) is formed, first of all, of a rigid reinforcement (41) and, secondly, of an internal covering (42) and an external covering (43) attached to said reinforcement (41).

3. A vehicle according to claim 2, **characterised in that** the rigid reinforcement (41) is formed of metal profiles, such as loops, connected together.

4. A vehicle according to claim 1, **characterised in that** sliding means are also provided at the upper section of the vehicle.

5. A vehicle according to claim 4, **characterised in that** sliding means are also provided on the lateral sections of the vehicle.

6. A vehicle according to claim 4, **characterised in that** said sliding means consist, on the one hand, of a rail (5), which is arranged on the roof hood (34) of the fixed cabin (3), along the longitudinal axis of said roof hood and, on the other hand, by sliding shoes (6) situated on the reinforcement (41 ).

7. A vehicle according to claim 6, **characterised in that** the sliding shoes (6) are situated directly on the reinforcement (41) by said reinforcement (41), and along the longitudinal axis of the mobile cabin (4).

8. A vehicle according to claim 6, **characterised in that** the sliding shoes (6) are situated on the internal covering (42), preferably by said reinforcement (41), and along the longitudinal axis of the mobile cabin (4).

9. A vehicle according to any of the claims 1 to 8, **characterised in that** it includes means for locking/unlocking the mobile cabin (4) on the passenger space (2).

10. A vehicle according to any of the claims 1 to 8, **characterised in that** it includes means for locking/unlocking the mobile cabin (4) on the fixed cabin (3).

11. A vehicle according to any of the claims 1 to 10, **characterised in that** the sliding floor (44) comprises a central portion (44a) and two lateral portions (44b) which may be folded on the central portion.
